# EUROPÄISCHE PATENTANMELDUNG

(11) **EP 3 557 343 A1**
(43) Veröffentlichungstag der Anmeldung: **23.10.2019**
(21) Anmeldenummer: 19170023.6
(22) Anmeldetag: 18.04.2019
(51) Int. Cl.: G05B 19/042, G06F 3/06

(54) **ELEKTRISCHES ANTRIEBSSYSTEM UND VERFAHREN ZUM BETREIBEN EINES SOLCHEN SYSTEMS**

(30) Priorität: 20.04.2018 DE 102018206117
(71) Anmelder: Lenze Automation GmbH, 31855 Aerzen (DE)
(72) Erfinder: Kühn, Johannes, 38106 Braunschweig (DE); Peckmann, Detlef, 38122 Braunschweig (DE)
(74) Vertreter: Patentanwälte Ruff, Wilhelm, Beier, Dauster & Partner mbB

(57) **Zusammenfassung**

Elektrisches Antriebssystem (1), aufweisend:
- eine Mehrzahl von elektrischen Steuergeräten (2_1, ..., 2_n), wobei die elektrischen Steuergeräte (2_1, ..., 2_n) jeweils aufweisen:
- einen, insbesondere nicht-flüchtigen, Speicher (3), der dazu ausgebildet ist, Steuergeräte-Daten (4_1, ..., 4_n) des jeweiligen Steuergeräts (2_1, ..., 2_n) zu speichern, und

- ein Bussystem (5), wobei die Mehrzahl von elektrischen Steuergeräten (2_1, ..., 2_n) mittels des Bussystems (5) zum Datenaustausch miteinander koppelbar sind,
- wobei die elektrischen Steuergeräte (2_1, ..., 2_n) jeweils dazu ausgebildet sind, Steuergeräte-Daten (4_1, ..., 4_n) anderer Steuergeräte (2_1, ..., 2_n) in ihrem Speicher (3) zu speichern.

## Beschreibung

Die Erfindung betrifft ein elektrisches Antriebssystem und ein Verfahren zum Betreiben eines elektrischen Antriebssystems.

Der Erfindung liegt die Aufgabe zugrunde, ein elektrisches Antriebssystem und ein Verfahren zum Betreiben eines elektrischen Antriebssystems zur Verfügung zu stellen, die eine hohe Betriebssicherheit und einfache Wartbarkeit aufweisen.

Die Erfindung löst diese Aufgabe durch ein elektrisches Antriebssystem nach Anspruch 1 und ein Verfahren zum Betreiben eines elektrischen Antriebssystems nach Anspruch 4.

Das elektrische Antriebssystem weist eine Mehrzahl von elektrischen Steuergeräten auf. Das elektrische Antriebssystem kann beispielsweise zwischen 2 und 50 elektrische Steuergeräte aufweisen.

Ein jeweiliges elektrisches Steuergerät weist einen, insbesondere nicht-flüchtigen, insbesondere steuergeräteinternen, elektrischen Speicher auf, der dazu ausgebildet ist, Steuergeräte-Daten des jeweiligen Steuergeräts zu speichern, insbesondere nicht-flüchtig zu speichern. Der Speicher kann ein nicht entnehmbarer, d.h. fest eingebauter, Speicher sein. Der Speicher kann beispielsweise ein Flash-Speicher sein.

Das elektrische Antriebssystem weist weiter ein herkömmliches Bussystem auf, insbesondere ein Feldbussystem. Bei dem Bussystem kann es sich beispielsweise um ein EtherNet/IP Bussystem, ein DeviceNet Bussystem, ein Profibus Bussystem, ein EtherCAT Bussystem, ein INTERBUS Bussystem, usw. handeln. Die elektrischen Steuergeräte sind herkömmlich mittels des Bussystems zum Datenaustausch miteinander koppelbar bzw. gekoppelt.

Die elektrischen Steuergeräte sind jeweils dazu ausgebildet, Steuergeräte-Daten anderer Steuergeräte in ihrem eigenen Speicher zu speichern. Hierbei kann ein jeweiliges Steuergerät beispielsweise alle Steuergeräte-Daten aller anderen Steuergeräte speichern, oder alle Steuergeräte-Daten lediglich eines Anteils der Mehrzahl von Steuergeräten speichern, oder lediglich einen Anteil der Steuergeräte-Daten aller anderen Steuergeräte speichern, oder lediglich einen Anteil der Steuergeräte-Daten lediglich eines Anteils der Mehrzahl von Steuergeräten speichern.

Gemäß einer Ausführungsform beinhalten die jeweiligen Steuergeräte-Daten Prozessdaten eines jeweiligen elektrischen Steuergeräts, und/oder Programmcode eines jeweiligen elektrischen Steuergeräts, und/oder Betriebsparameter eines jeweiligen elektrischen Steuergeräts, und/oder Logbuch-Daten eines jeweiligen elektrischen Steuergeräts. Prozessdaten können beispielsweise alle (veränderlichen) Daten sein, die während des Betriebs des Steuergeräts anfallen. Programmcode kann beispielsweise bei seiner Ausführung den Betrieb des elektrischen Steuergeräts bewirken. Programmcode kann beispielsweise eine Firmware und/oder ein Applikationsprogramm des elektrischen Steuergeräts sein. Betriebsparameter können beispielsweise solche Parameter sein, deren Werte Einfluss auf die Betriebsweise/Betriebsart des elektrischen Steuergeräts nehmen. Logbuch-Daten können beispielsweise Daten sein, die für eine spätere Auswertung des Betriebs des elektrischen Steuergeräts von Belang sind.

Gemäß einer Ausführungsform weist das elektrische Antriebssystem mindestens einen Elektromotor auf, wobei mindestens eines der elektrischen Steuergeräte ein Frequenzumrichter ist, der dazu ausgebildet ist, den mindestens einen Elektromotor anzusteuern. Auch können alle elektrischen Steuergeräte Frequenzumrichter sein, die dazu dienen, einen jeweils angeschlossenen Elektromotor anzusteuern. Die elektrischen Steuergeräte können alle typgleich sein, beispielsweise alle Frequenzumrichter bilden. Alternativ kann zumindest eines der Steuergeräte ein übergeordnetes Steuergerät sein, welches beispielsweise übergeordnete Funktionen innerhalb des Antriebssystems bereitstellt.

Das erfindungsgemäße Verfahren dient zum Betreiben eines oben beschriebenen elektrischen Antriebssystems. Bei einer Veränderung der Steuergeräte-Daten in einem jeweiligen Steuergerät werden die veränderten Steuergeräte-Daten im Speicher mindestens eines anderen Steuergeräts gespeichert.

Gemäß einer Ausführungsform werden bei einem Austauschen eines jeweiligen Steuergeräts durch ein Ersatz-Steuergerät Betriebsdaten des ausgetauschten Steuergeräts, die im Speicher mindestens eines anderen Steuergeräts gespeichert sind, von dem mindesten einen anderen Steuergerät zu dem Ersatz-Steuergerät übertragen und dann in dem Speicher des Ersatz-Steuergeräts gespeichert.

Elektrische Steuergeräte bzw. Frequenzumrichter weisen in der Regel elektrische (Wechsel-) Speicher (beispielsweise eine SD Karte, einen Memorystick, usw.) auf. Der Speicher wird beispielsweise dazu verwendet, Programme bzw. Programmcode zu speichern, (Betriebs-) Parameter zu speichern, Logbücher bzw. Logbuchdaten zu speichern und Prozessdaten zu speichern.

Wenn ein elektrisches Steuergerät beispielsweise aufgrund eines Defekts ausgetauscht werden muss, dann wird herkömmlich der Speicher des auszutauschenden Steuergeräts aus dem auszutauschenden Steuergerät entnommen und in ein Ersatz-Steuergerät eingesetzt. Das ist jedoch möglicherweise mit Problemen verbunden, denn der Speicher kann defekt sein oder für eine Rekonstruktion eines Fehlers des auszutauschenden Steuergeräts benötigt werden. Außerdem ist Wissen darüber notwendig, wie der Speicher zu tauschen ist. Ein weiteres Problem ist das Auslesen von Prozessdaten, das typisch nur sehr langsam über das Bussystem oder direkt am Gerät möglich ist. Wenn der Speicher fehlerhaft ist oder zerstört wird, dann muss dieser neu befüllt werden. Das geschieht in der Regel softwarebasiert mittels eines Service-Notebooks, wozu häufig ein Internetzugang notwendig ist.

Erfindungsgemäß können diese Nachteile vermieden werden. Daten eines jeweiligen Steuergeräts werden automatisch redundant in anderen Steuergeräten gespeichert. So können beispielsweise Prozessdaten, beliebige Parameter, insbesondere in Form von Betriebsparametern, automatisch in anderen Steuergeräten gespeichert werden. Die Steuergeräte stellen dem Antriebssystem nicht benötigten Speicher zur Verfügung. Bei einem Defekt oder Ausfall eines Steuergeräts werden die für das Ersatz-Steuergerät notwendigen Daten von einem oder mehreren der anderen Steuergeräte in das Ersatz-Steuergerät geladen. Bei einer Systemanalyse stehen Prozessdaten, Dreh-Momente, Frequenzanalysen, Logbücher, Rezepturen, etc. zur Verfügung.

Ein jeweiliges Steuergerät fungiert hierbei als lokaler Cloud-Server, wobei mittels der Mehrzahl an Steuergeräten im Verbund ein Raid-Mechanismus bereitgestellt werden kann, mittels dem eine automatische antriebssystemweite Datensicherung erreicht werden kann. Bei einem Austausch eines Steuergeräts können alle notwendigen Daten/Programme auf das Ersatz-Steuergerät zurückgespielt werden, so dass ein Selbstheilungsmechanismus gegeben ist.

Zusätzlich besteht die Möglichkeit, den Speicher der Steuergeräte zusammenzufassen, damit in Summe größere Datenmengen als in Einzelgeräten gehalten werden können. Weiter besteht die Möglichkeit, dass einzelne Steuergeräte größere Datenmengen verarbeiten können, als dies es ohne einen Steuergeräteverbund möglich wäre.

Dies resultiert in geringeren Hardware-Kosten der Umrichter, da keine dedizierten Speicher für den Backup der Steuergerätedaten vorgehalten werden müssen, einem geringeren Austauschaufwand, einer höheren Datensicherheit, einem geringeren Logistikaufwand und einem Zusatznutzen für die so genannte Industrie 4.0, insbesondere im Kontext so genannter Drive-Based Frequenzumrichter ohne eine zentrale Steuerung und ohne Internetanbindung.

Das Bussystem bzw. der Feldbus dient hierbei sowohl zum automatischen Datenaustausch für die Clou-Daten als auch zum Speicherabgleich.

Die Erfindung wird nachfolgend unter Bezugnahme auf die Zeichnung detailliert beschrieben. Hierbei zeigt:

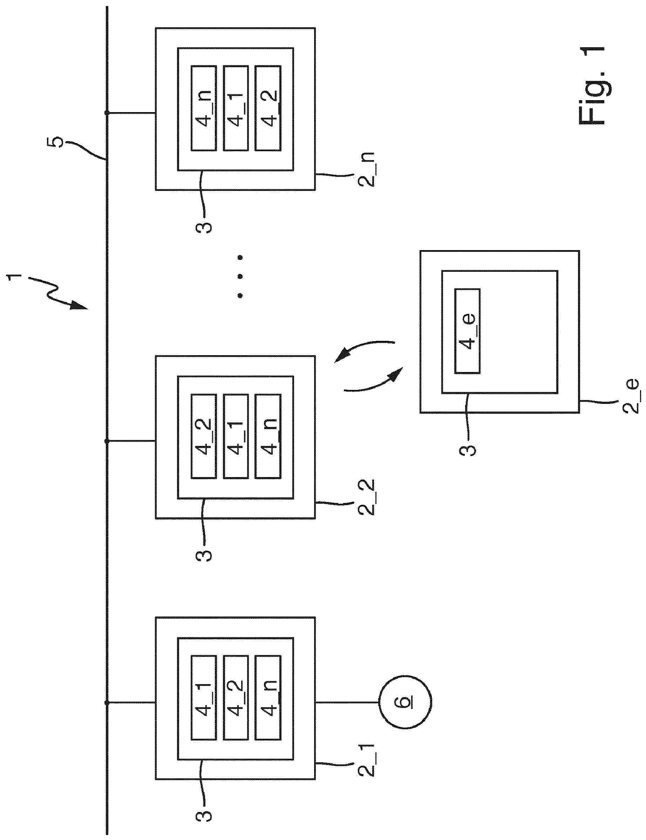

- Fig. 1: ein erfindungsgemäßes elektrisches Antriebssystem.

Fig. 1 zeigt ein elektrisches Antriebssystem 1 mit einer Mehrzahl von elektrischen Steuergeräten 2_1, ..., 2_n in Form von Frequenzumrichtern. "n" bezeichnet eine natürliche, ganze Zahl, deren Wertebereich beispielsweise zwischen 2 und 50 liegen kann.

Die elektrischen Steuergeräte 2_1, ..., 2_n weisen jeweils einen nicht-flüchtigen Speicher 3 auf, der dazu ausgebildet ist, Steuergeräte-Daten 4_1, ..., 4_n des jeweiligen Steuergeräts 2_1, ..., 2_n zu speichern. Hierbei bezeichnet das Bezugszeichen 4_1 Steuergeräte-Daten des Steuergeräts 2_1, das Bezugszeichen 4_2 Steuergeräte-Daten des Steuergeräts 2_2 und das Bezugszeichen 4_n Steuergeräte-Daten des Steuergeräts 2_n.

Das elektrische Antriebssystem 1 weist weiter ein Feldbussystem 5 auf, wobei die Mehrzahl von elektrischen Steuergeräten 2_1, ..., 2_n mittels des Feldbussystems 5 zum Datenaustausch miteinander gekoppelt sind.

Wie symbolisch dargestellt, sind die elektrischen Steuergeräte 2_1, ..., 2_n jeweils dazu ausgebildet, Steuergeräte-Daten 4_1, ..., 4_n anderer Steuergeräte 2_1, ..., 2_n in ihrem Speicher 3 zu speichern.

So speichert das Steuergerät 2_1 neben seinen eigenen Steuergeräte-Daten 4_1 auch die Steuergeräte-Daten 4_2 und 4_n der Steuergeräte 2_2 bzw. 2_n. Das Steuergerät 2_2 speichert neben seinen eigenen Steuergeräte-Daten 4_2 auch die Steuergeräte-Daten 4_1 und 4_n der Steuergeräte 2_1 bzw. 2_n. Das Steuergerät 2_n speichert neben seinen eigenen Steuergeräte-Daten 4_n auch die Steuergeräte-Daten 4_1 und 4_2 der Steuergeräte 2_1 bzw. 2_2.

Die Steuergeräte-Daten können beispielsweise Prozessdaten eines jeweiligen Steuergeräts 2_1, ..., 2_n, und/oder Programmcode eines jeweiligen elektrischen Steuergeräts 2_1, ..., 2_n, und/oder Betriebsparameter eines jeweiligen elektrischen Steuergeräts 2_1, ..., 2_n, und/oder Logbuch-Daten eines jeweiligen elektrischen Steuergeräts 2_1, ..., 2_n sein.

Das elektrische Antriebssystem 1 weist weiter einen Elektromotor 6 auf, wobei das Steuergerät 2_1 dazu ausgebildet ist, den Elektromotor 6 anzusteuern. Es versteht sich, dass weitere, nicht dargestellte Elektromotoren vorhanden sein können, die mittels eines zugehörigen Frequenzumrichters 2_2 bis 2_n angesteuert werden.

Die Steuergeräte 2_1 bis 2_n sind derart ausgebildet, dass bei einer Veränderung der Steuergeräte-Daten 4_1, ..., 4_n in einem jeweiligen Steuergerät 2_1, ..., 2_n die veränderten Steuergeräte-Daten 4_1, ..., 4_n im Speicher 3 mindestens eines anderen Steuergeräts 2_1, ..., 2_n gespeichert bzw. aktualisiert werden.

Nachfolgend wird ein Austausch des Steuergeräts 2_2 durch ein Ersatz-Steuergerät 2_e beschrieben.

Die Betriebsdaten 4_2 des ausgetauschten Steuergeräts 2_2, die im Speicher 3 des Steuergeräts 2_1 und 2_n gespeichert sind, werden von einem der anderen Steuergeräte 2_1 bzw. 2_n zu dem Ersatz-Steuergerät 2_e übertragen, worauf das Ersatz-Steuergerät 2_e die Betriebsdaten 4_2 in seinem eigenen Speicher 3 speichert und somit einen Speicherinhalt aufweist, der dem ausgetauschten Steuergeräts 2_2 entspricht. Ein aufwändiger manueller Speicherupdate des Speichers 3 des Ersatz-Steuergeräts 2_e ist folglich nicht notwendig.

## Patentansprüche

1. Elektrisches Antriebssystem (1), aufweisend:
- eine Mehrzahl von elektrischen Steuergeräten (2_1, ..., 2_n), wobei die elektrischen Steuergeräte (2_1, ..., 2_n) jeweils aufweisen:
- einen, insbesondere nicht-flüchtigen, Speicher (3), der dazu ausgebildet ist, Steuergeräte-Daten (4_1, ..., 4_n) des jeweiligen Steuergeräts (2_1, ..., 2_n) zu speichern, und
- ein Bussystem (5), wobei die Mehrzahl von elektrischen Steuergeräten (2_1, ..., 2_n) mittels des Bussystems (5) zum Datenaustausch miteinander koppelbar sind,
**dadurch gekennzeichnet, dass**
- die elektrischen Steuergeräte (2_1, ..., 2_n) jeweils dazu ausgebildet sind, Steuergeräte-Daten (4_1, ..., 4_n) anderer Steuergeräte (2_1, ..., 2_n) in ihrem Speicher (3) zu speichern.

2. Elektrisches Antriebssystem (1) nach Anspruch 1, **dadurch gekennzeichnet, dass**
- die jeweiligen Steuergeräte-Daten (4_1, ..., 4_n) beinhalten:
- Prozessdaten eines jeweiligen elektrischen Steuergeräts (2_1, ..., 2_n), und/oder
- Programmcode eines jeweiligen elektrischen Steuergeräts (2_1, ..., 2_n), und/oder
- Betriebsparameter eines jeweiligen elektrischen Steuergeräts (2_1, ..., 2_n), und/oder
- Logbuch-Daten eines jeweiligen elektrischen Steuergeräts (2_1, ..., 2_n).

3. Elektrisches Antriebssystem (1) nach Anspruch 1 oder 2, **dadurch gekennzeichnet, dass**
- das elektrische Antriebssystem (1) mindestens einen Elektromotor (6) aufweist, wobei mindestens eines der elektrischen Steuergeräte (2_1) ein Frequenzumrichter ist, der dazu ausgebildet ist, den mindestens einen Elektromotor (6) anzusteuern.

4. Verfahren zum Betreiben eines elektrischen Antriebssystems (1) nach einem der vorhergehenden Ansprüche,
**dadurch gekennzeichnet, dass**
- bei einer Veränderung der Steuergeräte-Daten (4_1, ..., 4_n) in einem jeweiligen Steuergerät (2_1, ..., 2_n) die veränderten Steuergeräte-Daten (4_1, ..., 4_n) im Speicher (3) mindestens eines anderen Steuergeräts (2_1, ..., 2_n) gespeichert werden.

5. Verfahren nach Anspruch 4,
**dadurch gekennzeichnet, dass**
- bei einem Austauschen eines jeweiligen Steuergeräts (2_2) durch ein Ersatz-Steuergerät (2_e) Betriebsdaten (4_2) des ausgetauschten Steuergeräts (2_2), die im Speicher (3) eines anderen Steuergeräts (2_1) gespeichert sind, von dem anderen Steuergerät (2_1) zu dem Ersatz-Steuergerät (2_e) übertragen werden und dann in dem Speicher (3) des Ersatz-Steuergeräts (2_e) gespeichert werden.
